Europäisches Patentamt

European Patent Office

Office européen des brevets

(11) Veröffentlichungsnummer: **0 240 652**
**A1**

# EUROPÄISCHE PATENTANMELDUNG

(21) Anmeldenummer: **87100834.8**

(22) Anmeldetag: **22.01.87**

(51) Int. Cl.⁴: **B66C 23/74**

(30) Priorität: **07.04.86 DE 3611593**

(43) Veröffentlichungstag der Anmeldung:
**14.10.87 Patentblatt 87/42**

(84) Benannte Vertragsstaaten:
**BE DE ES FR GB GR IT NL SE**

(71) Anmelder: **Harnischfeger GmbH**
**Sunderweg 86**
**D-4600 Dortmund 1(DE)**

(72) Erfinder: **Lottermoser, Dieter, Ing.grad.**
**Lübbertweg 16**
**D-4600 Dortmund 13(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) Verfahren zum Anhängen und Ablegen eines Ausleger-Gegengewichtes von
Hydraulik-Fahrzeugkranen und Einrichtung zum Durchführen des Verfahrens.

(57) Auf der Grundplatte (30) unter dem Windenträger (7) des Oberwagens eines Hydraulik-Fahrzeugkrans ist mindestens ein hydraulisch betätigter Schubkolbentrieb (14) an einem Stützbock (17) pendelnd gelagert, an dessen freiem Kolbenstangenende ein Kupplungselement (23) angeordnet ist, das mit einem Kupplungselement (24) an dem in Arbeitsstellung des Krans unterhalb der Grundplatte angeordnete Gegengewicht (10) korreliert.

Ein Verfahren sowie eine Einrichtung zum Durchführen des Verfahrens ist vorgesehen um das Anhängen und das Ablegen des Gegengewichtes selbsttätig mit nur einer Bedienungsperson durchzuführen.

Fig 2

## "Verfahren zum Anhängen und Ablegen eines Ausleger-Gegengewichtes von Hydraulik-Fahrzeugkranen und Einrichtung zum Durchführen des Verfahrens"

Die Erfindung bezieht sich auf Hydraulik-Fahrzeugkrane mit abnehmbarem Ausleger-Gegengewicht. Sie hat ein Verfahren zum Anhängen und Ablegen eines an dem Windenträger des - schwenkbaren Oberwagens des Fahrzeugkrans angeordneten Ausleger-Gegengewichtes sowie eine Einrichtung zur Durchführung dieses Verfahrens zum Gegenstand, bei dem auf dem Windenträger mindestens ein Schubkolbentrieb vertikal angeordnet ist, dessen freies Kolbenstangenende mittels an diesem und an dem Gegengewicht angeordnete korrelierende Kupplungselemente, wie Rundbolzen, Haken od. dgl., mit dem Gegengewicht kuppelbar und entkuppelbar ist.

Bei Hydraulik-Fahrzeugkranen ist es vielfach üblich, das an dem Windenträger des Kranoberwagens angeordnete Ausleger-Gegengewicht zur Gänze oder zumindest teilweise für die Dauer eines Wechsels von einem Einsatzort zu einem anderen vor dem Windenträger abzunehmen, um die hinteren Fahrzeugachsen zu entlasten und eine für die Straßenfahrt ungünstige Hecklastigkeit des Gesamtfahrzeugs zu vermeiden. Das von dem Windenträger abgenommene Gegengewicht wird in der Regel auf dem Unterwagen des Fahrzeugkrans zwischen dem Fahrerhaus und dem schwenkbaren Oberwagen abgelegt, so daß für die Straßenfahrt eine bessere Lastvertei lung auf die Fahrzeugachsen erreicht wird. Es ist aber auch üblich, das Gegengewicht für Ortswechselfahrten auf einem besonderen Fahrzeug, z.B. auf einem an dem Fahrzeugkran angehängten Nachläufer, abzulegen und mitzuführen (US - 38 91 095).

Zum Anheben des Gegengewichts, um dieses an dem Windenträger zu befestigen, sowie zum Ablegen desselben bedient man sich häufig eines in üblicher Weise aus Zylinder und Kolben mit Kolbenstange bestehenden hydraulisch betätigten Schubkolbentriebs, der vertikal auf dem Windenträger angeordnet ist oder auch zweier derartiger Schubkolbentriebe. Das freie Ende der Kolbenstange des jeweiligen Schubkolbentriebs ist mit Hilfe von an der Kolbenstange und an dem Gegengewicht angeordneten korrelierenden Kupplungselementen, wie Rundbolzen, Haken od. dgl., mit dem Gegengewicht kuppelbar und auch wieder entkuppelbar. Das Kuppeln und Entkuppeln geschieht bisher von Hand, in der Regel durch zwei Bedienungspersonen, die unmittelbar an dem Gegengewicht zum Verbinden und Lösen der Kupplungselemente tätig und daher einer Unfallgefahr ausgesetzt sind.

Der Erfindung liegt die Aufgabe zugrunde, ein Verfahren sowie eine Einrichtung zum Durchführen dieses Verfahrens zu schaffen, durch die es möglich ist, das Anhängen und Ablegen des Gegengewichtes selbsttätig nur mit einer Bedienungsperson durchzuführen, die sich während dieser Arbel ten außerhalb des Gegengewicht-Gefahrensbereiches aufhalten kann und sowohl die Kupplungselemente als auch die Arretiervorrichtungen für das in Arbeitstellung angehobene Gegengewicht nicht mehr von Hand einzulegen und zu lösen braucht.

Die Lösung dieser Aufgabe besteht in dem Verfahren sowie in einer Einrichtung zur Durchführung dieses Verfahrens, wie sie durch die Patentansprüche gekennzeichnet sind.

Der besondere Vorteil der Erfindung besteht darin, daß nur eine Bedienungsperson für das Ablegen und Anhängen des Gegengewichtes erforderlich ist. Die Bedienungsperson braucht zum Anheben und Ablegen des Gegengewichtes lediglich an sich bekannte Ventile für die Zufuhr bzw. das Ablassen von Hydraulikflüssigkeit zu bzw. von dem Zylinder des Schubkolbentriebs zu betätigen, während die korrelierenden Kupplungselemente an der Kolbenstange des jeweiligen Schubkolbentriebs und an dem Gegengewicht ihre Kuppel-und Schwenkbewegungen selbstätig ausführen, also nicht von Hand betätigt zu werden brauchen. Das Betätigen der Ventile kann vorteilhafterweise von der Fahrzeugkabine aus geschehen.

In Ausgestaltung der Erfindung ist vorgesehen, daß das Kupplungselement an der Kolbenstange als nach oben offener Haken und das Kupplungselement am Gegengewicht als Rundbol zen ausgebildet ist. Bei dieser Ausbildung der beiden Kupplungselemente kann das Gegengewicht in einfacher Gießtechnik und ohne schwieriges Formen hergestellt werden. Der als Kupplungselement vorgesehene Rundbolzen kann dann entweder in auf dem Gegengewicht angegossene Ansätze oder aber in Bohrungen des gegossenen Gegengewichtes eingesetzt werden.

In einer anderen erfindungsgemäßen Ausführung der Kupplungselemente ist das Kupplungselement an der Kolbenstange als Rundbolzen und das Kupplungselement am Gegengewicht als nach unten offener Haken ausgebildet. Diese Ausbildung hat sich in soweit als vorteilhaft herausgestellt, als sie die Möglichkeit bietet, das freie Kolbenstangenende in üblicher Weise mit einem Auge zu versehen, in das als Kupplungselement ein Rundbolzen eingesetzt ist, der beiderseits herausragt und unter den dann gabelartig ausgebildeten Kupplungshaken des Gegengewichtes greift.

Andererseits kann es in machen Fällen zweckmäßig sein, das Kupplungselement an der Kolbenstange als nach oben offenen Haken und das Kupplungselement am Gegengewicht als nach unten offenen Haken auszubilden, wobei die Spitzen der beiden Haken einander entgegengesetzt gerichtet sind. Diese Ausbildung empfiehlt sich insbesondere für sehr schwere Gegengewichte bzw. Gegengewichtsteile, da die in der Kuppelstellung ineinandergreifenden Haken sich gegenseitig außerordentlich gut gegen Lösen bzw. Abrutschen sichern.

Schließlich ist in weiterer Ausgestaltung der erfindungsgemäßen Einrichtung vorgesehen, daß das am Gegengewicht angeordnete Kupplungselement und die am Gegengewicht angeordnete Gleitfläche für das freie Ende der Kolbenstange bzw. das an dieser befindliche Kupplungselement in das Gegengewicht eingelassen sind. Hierdurch wird der Vorteil erreicht, daß keinerlei dem Ankuppeln oder Entkuppeln des Gegengewichtes dienende Konstruktionsteile aus dem Gegengewicht hervorstehen, die einerseits eine Unfallgefahr bilden könnten und andererseits den Platzbedarf für das Gegengewicht vergrößern würden.

Was in manchen Fällen, insbesondere bei Fahrzeugkranen mit verhältnismäßig kleinem Gegengewicht, ausreichend sein kann, lediglich einen Schubkolbentrieb zum Anhängen und Ablegen des Gegengewichtes mittig zu diesem auf dem Windenträger anzuordnen, empfiehlt es sich, insbesondere bei größeren Gegengewichten, auf dem Windenträger zwei Schubkolbentriebe vorbeschriebener Art mit jeweils an ihnen und dem Gegengewicht zugeordneten Kupplungselementen im Abstand voneinander und parallel zueinander anzuordnen und diese zwecks Gleichlaufs in an sich bekannter Weise hydraulisch miteinander zu verbinden.

Grundsätzlich ist es für die Erfindung ohne Belang, ob die Schwenkachse des jeweiligen Schubkolbentriebs senkrecht oder parallel zur Fahrtrichtung des Fahrzeugkrans angeordnet ist.

Die Schubkolbentriebe, die Bereitstellung der Druckflüssigkeit und die zugehörigen Leitungen und Ventile sind allgemeiner Stand der Technik, daher nicht Gegenstand der Erfindung und weder beschrieben noch in der Zeichnung dargestellt. Ebenso wurde zur Erhaltung der Übersichtlichkeit der Zeichnung darauf verzichtet, Einzelheiten der in üblicher Weise auf dem Kranunterwagen und am Gegengewicht angeordneten Halterungen, Zapfen, Bohrungen u. dgl. darzustellen, durch welche das Gegengewicht in an sich bekannter Weise in der vorgesehenen Ablege-bzw. Anhängeposition gehalten ist.

In der Zeichnung ist die Erfindung beispielhaft dargestellt.

Fig. 1 zeigt einen Hydraulik-Fahrzeugkran in der Seitenansicht mit Auslegerstellung für die Straßenfahrt,

Fig. 2 stellt vergrößert den Ausschnitt "A" aus Fig. 1 dar, jedoch teilweise in Schnittführung durch das Gegengewicht und den Windenträger. Die auf dem Windenträger in üblicher Weise angeordneten Windentrommeln sind der Übersichtlichkeit der Zeichnung wegen nicht dargestellt,

Fig. 3 und 4 zeigen Varianten der Ausführung der Kupplungselemente an Gegengewicht und Kolbenstange.

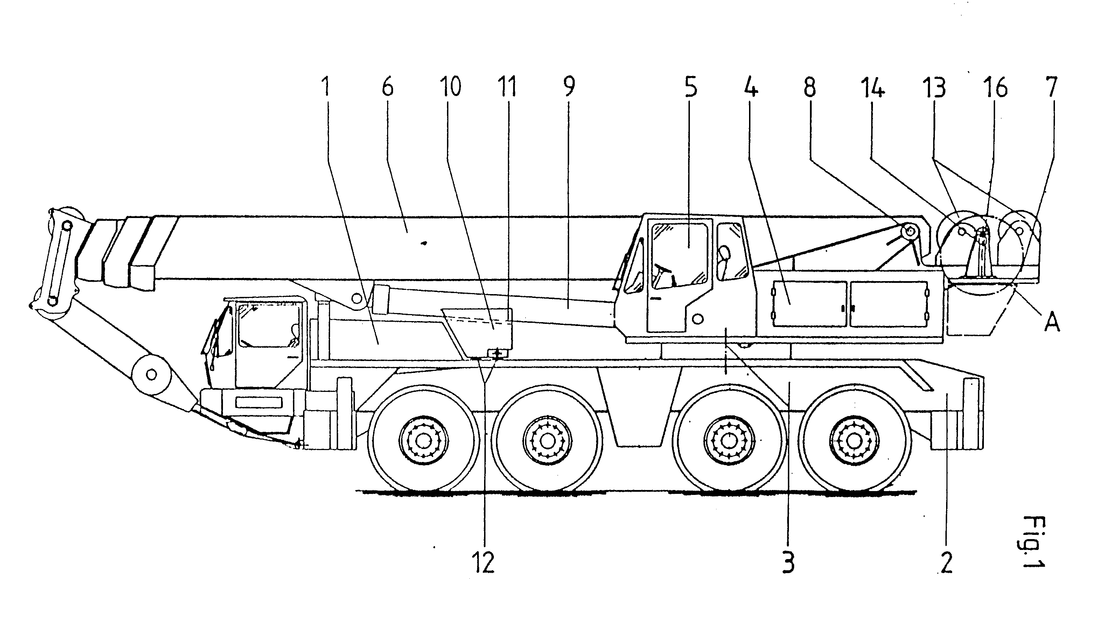

Gemäß Fig. 1 besteht der mit der erfindungsgemäßen Einrichtung versehene Hydraulik-Fahrzeugkran 1 in an sich bekannter Weise im wesentlichen aus dem Unterwagen 2, dem auf diesem um eine vertikale Achse 3 schwenkbar gelagerten Oberwagen 4 mit Bedienungskabine 5, Teleskopausleger 6 und Windenträger 7. Der Teleskopausleger 6 ist mit dem Drehlager 8 an dem Oberwagen 4 befestigt und mittels Hubzylinder 9 in bekannter Weise höhenverstellbar. Das Auslegergegengewicht 10 - im folgenden kurz Gegengewicht genannt - ist bei der dargestellten Auslegerstellung auf dem Unterwagen 2 abgelegt, es ist mit einer Aussparung 11 für den Hubzylinder 9 versehen und mit an sich bekannten Führungsbolzen und Halterungen 12 in seiner Lage fixiert. Auf dem Windenträger 7 ist beiderseits der beiden Windentrommeln 13 jeweils ein erfindungsgemäßer Schubkolbentrieb 14 vertikal an dem Stützbock 17 pendelnd gelagert. Die Position des in Arbeitsstellung am Windenträger 7 aufgehängten Gegengewichtes 10 ist mit strichpunktierten Linien dargestellt.

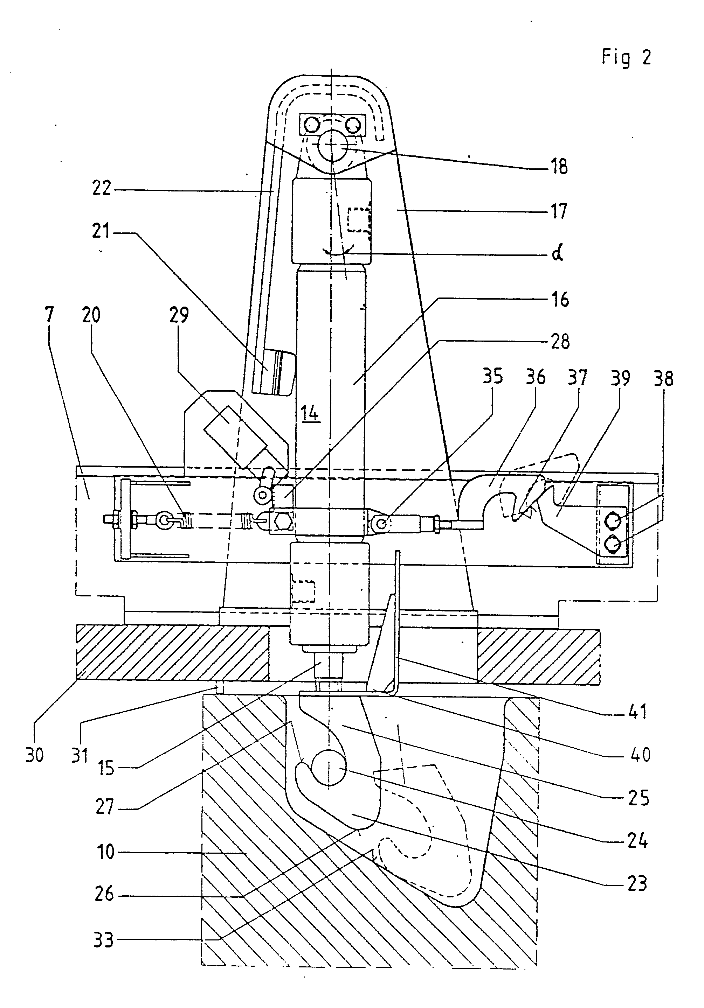

Die wesentlichen Teile der erfindungsgemäßen Einrichtung sowie deren Funktion werden anhand der Fig. 2 erläutert, die das Gegengewicht 10 in Arbeitsposition am Windenträger 7 darstellt. An dem Windenträger 7 ist ein Stützbock 17 befestigt. An dem Stützbock 17 ist mittels Lager 18 der Zylinder 16 des Hubkolbentriebs 14 pendelnd gelagert und in Vertikalstellung mit Hilfe einer an dem Stützbock 17 befestigten Rückhaltefeder 20 gegen einen Anschlag 21 gehalten, der seinerseits ebenfalls an einem Konstruktionsteil 22 des Stützbocks 17 befestigt ist. An der Kolbenstange 15 ist als Kupplungselement ein Haken 23 angeordnet, der mit dem in das Gegengewicht 10 als Kupplungselement eingefügten Rundbolzen 24 korreliert. Der Haken 23 weist eine gegenüber der vertikalen Längsachse 25 der Kolbenstange 15 schräg verlaufende, äußere Gleitbahn 26 auf. Diese bewirkt beim Zusammentreffen des Hakens 15 mit dem Rundbolzen 24, wenn die Kolbenstange 15 aus einer oberen, jedoch nicht dargestellten Ausgangslage zum Anheben des auf dem Unterwagen 2 abgelegten Gegengewichtes 10 (vergl. Fig. 1) nach unten gefahren wird, daß der Schubkolbentrieb 14 insgesamt gegen die Kraft der Rückhaltefeder 20 aus der dargestellten Vertikalstellung ausgeschwenkt wird. Sobald die Spitze 27 des Hakens 23 den tiefsten Punkt des Rundbolzens 24 unterfahren hat, wird der Schubkolbentrieb 14 durch Einwirkung der Rückhaltefeder 20 in die Vertikalstellung bis an den Anschlag 21 zurückgeschwenkt und betätigt über einen Anschlag 28 den Grenzwertschalter 29, der in an sich bekannter Weise über ein nicht dargestelltes Ventil bewirkt, daß der an der Kolbenstange 15 angeordnete und ebenfalls nicht dargestellte Kolben von unten mit Druckflüssigkeit beaufschlagt und die Kolbenstange 15 wieder eingefahren wird, bis zunächst der Haken 23 und der Rundbolzen 24 miteinander wie dargestellt gekuppelt sind und schließlich das Gegengewicht 10 bis in die dargestellte Höchstlage angehoben ist. Ein zwischen dem Gegengewicht 10 und der Grundplatte 30 des Windenträgers 7 angeordneter und an sich bekannter End-/Umschalter 31 schaltet den Zustrom von Druckflüssigkeit in den Zylinder 16 ab und schließt ein im Hydrauliksystem überlicherweise angeordnetes Sperrventil, um ein unbeabsichtigtes Abfließen von Druckflüssigkeit und damit verbundenes Ausfahren der Kolbenstange 15 zu verhindern.

Wenn das Gegengewicht 10 auf dem Unterwagen 2 abgelegt und hierzu Gegengewicht 10 und Kolbenstange 15 entkuppelt werden sollen, laufen die Bewegungs-und Steuerungsvorgänge bei dem dargestellten Ausführungsbeispiel der erfindungsgemäßen Einrichtung wie folgt ab:

Zunächst wird der Oberwagen 4 von der Bedienungskabine 5 aus in an sich bekannter Weise aus der in Fig. 1 dargestellten Lage um 180° geschwenkt, bis das Gegengewicht 10 genau über den am Unterwagen angeordneten Führungsbolzen und Halterungen 12 positioniert ist. Dann wird durch den Bedienungsmann in der Kabine 5 (Fig. 1) ein Ventil im Hydrauliksystem des Schubkolbentriebs 14 geöffnet, so daß der Kolben in dem Zylinder von oben mit Druck beaufschlagt wird, die Kolbenstange 15 nach unten ausfährt und das Gegengewicht 10 auf dem Unterwagen 2 aufsetzt. Durch weiteres Absenken der Kolbenstange 15 wird der Haken 23 von dem Rundbolzen 24 frei, seine Aufgleitfläche 26 trifft schließlich auf eine - schräg nach unten sowie entgegengesetzt zu der am Zylinder 16 befestigten Rückhaltefeder 20 verlaufende Gleitfläche 33 und gleitet auf dieser bis die Kolbenstange 15 des Zylinders 16 ihre tiefste Stellung erreicht (gestrichelt dargestellt), so daß der Schubkolbentrieb 14, gegen die Kraft der Rückhaltefeder 20, um den Winkel aus der Vertikalen verschwenkt wird. Während dieser Schwenkbewegung wird ein an dem Zylinder 16 mit Bolzen 35 nach oben schwenkbar befestigter Arretierhaken 36, dessen Aufgleitfläche 37 Kontakt mit einer an dem Stützbock 17 mit Schrauben 38 befestigten hakenförmigen Halterung 39 hat, von der Halterung 39 angehoben und klinkt in diese beim Erreichen des Schwenkwinkels ein (gestrichelt dargestellt). Mit dem Einklinken des Arretierhakens 36 in die Halterung 39 wird ein nicht dargestelltes Umschaltventil betätigt, durch welches die Beaufschlagung des Kolbens mit Druckflüssigkeit in dem Zylinder 16 von der Oberseite auf die Unterseite umgeleitet wird, so daß die Kolbenstange 15 wieder angehoben wird, wobei der Haken 23 ungehindert an dem Rundbolzen 24 vorbeibewegt wird. Im Bereich des freien Endes der Kolbenstange 15 ist an dieser ein winkelförmiger Stößel 40 befestigt, dessen langer Schenkel 41 beim Einfah ren der Kolbentange 15, kurz vor dem Erreichen der oberen Endlage der Kolbenstange, den Arretierhaken 36 durch Anheben aus der Halterung 39 ausklinkt, so daß der Schubkolbentrieb 14 von der Rückhaltefeder 20 gegen den elastischen Anschlag 21 in die vertikale Ruhestellung zurückgeschwenkt wird.

Der am Zylinder 16 angeordnete Anschlag 28 betätigt einen Grenzwertschalter 29, so daß der Zustrom von Druckflüssigkeit in den Zylinder 16 abgestellt wird.

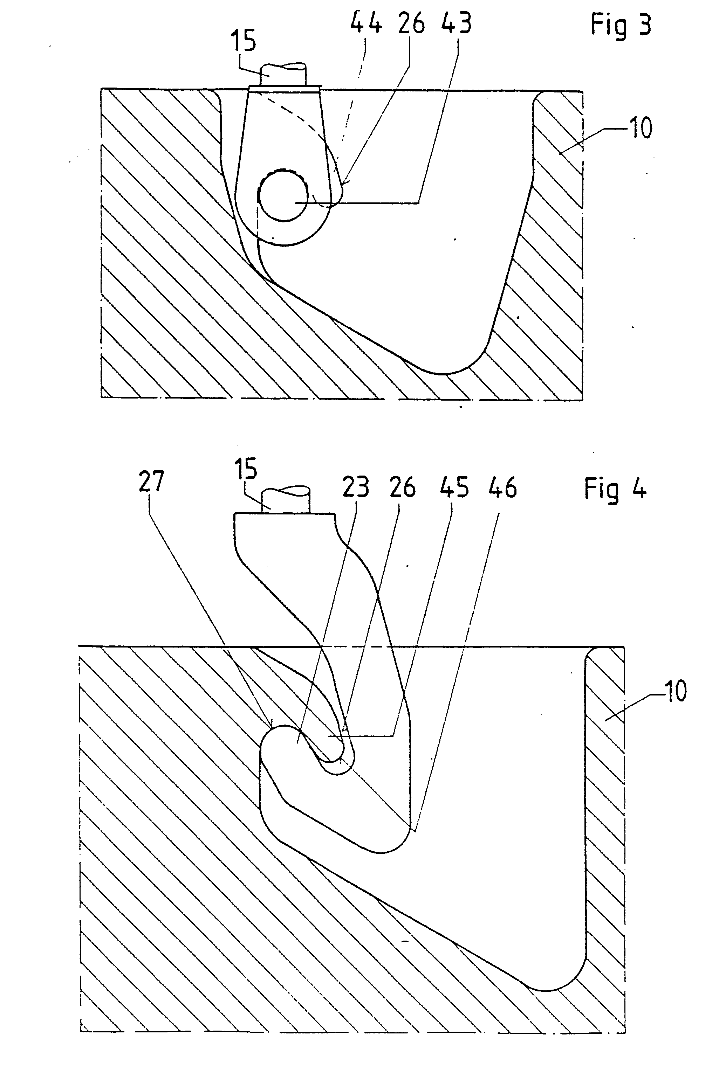

Bei der in Fig. 3 dargestellten Variante der Kupplungselemente an Kolbenstange 15 und Gegengewicht 10 ist das Kupplungselement an der Kolbenstange ein in ein sogenanntes Auge 42 eingesetzter Rundbolzen, während das Kupplungselement am Gegengewicht als nach unten offener Haken ausgebildet ist, dessen Oberseite eine Gleitbahn 26 zum Ablenken des beim Absenken der Kolbenstange 15 auftreffenden Rundbolzens 43 aufweist.

Die in Fig. 4 dargestellte Variante zeigt eine Ausführung, bei der das Kupplungselement an der Kolbenstange 15 als nach oben offener Haken 23 mit Gleitbahn 26 und das Kupplungselement am Gegengewicht 10 als nach unten offener Haken 45 ausgebildet ist, wobei die Hakenspitzen 27 und 46 einander entgegengerichtet sind.


BEZUGSZAHLEN-LISTE

    1 Hydraulik-Fahrzeugkran
    2 Unterwagen
    3 Vertikale Achse
    4 Oberwagen

5 Bedienungskabine
6 Teleskopausleger
7 Windenträger
8 Drehlager
9 Hubzylinder
10 Ausleger-Gegengewicht
11 Aussparung ( in 10 )
12 Führungsbolzen und Halterungen (auf dem Unterwagen 2)
13 Windentrommeln
14 Schubkolbentriebe
15 Kolbenstange
16 Zylinder
17 Stützbock
18 Lager
19
20 Rückhaltefeder
21 Anschlag
22 Konstruktionsteil (von 17)
23 Haken (an 15)
24 Rundbolzen (an 10)
25 Vertikale Längsachse der Kolbenstange 15)
26 Gleitbahn (an 23)
27 Hakenspitze
28 Anschlag
29 Grenzwertschalter
30 Grundplatte (an 7)
31 End-/Umschalter
32
33 Gleitfläche (10)
34 Aussparung (10)
35 Bolzen
36 Arretierhaken
37 Aufgleitfläche (von 36)
38 Schrauben
39 Halterung (für 37)
40 Stößel
41 Langer Schenkel (von 40)
42 Auge (an 15) (Fig. 3)
43 Rundbolzen (an 15) (Fig. 3)
44 Haken (an 10) (Fig. 3)
45 Nach unten offener Haken (an 10) (Fig. 4)
46 Hakenspitze (von 45)

## Ansprüche

1. Verfahren zum Anhängen und Ablegen eines an einem Windenträger (7) eines schwenkbaren Oberwagens (4) eines Hydraulik-Fahrzeugkrans (1) angeordneten Auslegergegengewichtes (10), wobei das Ablegen und Auflegen des Gegengewichtes (10) über mindestens einen Schubkolbentrieb (14) vorgenommen wird und wobei das oder die freien Enden der Kolbenstangen (15) mittels an diesen und an dem Auslegergegengewicht (10) angeordneten korrespondierenden Kupplungselementen (23;43;24,44,45) miteinander lösbar verbindbar sind, dadurch gekennzeichnet, daß das Kuppeln und das Entkuppeln des Gegengewichtes (10) vollautomatisch vorgenommen wird, wobei zum Kuppeln bzw. Anhängen des Gegengewichtes (10) eine Kupplung durch form-und kraftschlüssige Verbindungen zwischen den korrespondierenden Kupplungselementen durch Absenken der Kolbenstange (15) vorgenommen wird und beim Entkuppeln das freie Ende der Kolbenstange (15) über eine Gleitfläche (33) außer Eingriff relativ zum korrespondierenden Kupplungselement am Gegengewicht (10) verfahren und über eine Sperre (36) in dieser das Entkuppeln ermöglichenden Aus-schwenkstellung gehalten und am Kupplungsele-ment vorbei in seine obere Endlage bewegt wird.

2. Verfahren nach Anspruch 1, dadurch gekennzeichnet, daß zum Anhängen des Gegengewichtes (10) die Kolbenstange (15) durch Zufuhr von Druckflüssigkeit nach unten ausgefahren und beim Auftreffen des am freien Kolbenstangenende angeordneten Kupplungselementes (23,43) auf das am Gegengewicht angeordnete Kupplungselement (24,44,45) der Schubkolbentrieb (14) soweit aus der Vertikalstellung herausgeschwenkt wird, daß das an der Kolbenstange angeordnete Kupplungselement (23,43) an dem am Gegengewicht angeordneten Kupplungselement (24,44,45) vorbei bis unter dieses bewegbar ist, und daß nach dem Unterfahren des am Gegengewicht angeordneten Kupplungselementes (24,44,45) durch das an der Kolbenstange befindliche Kupplungselement (23,43) der Schubkolbentrieb (14) wieder so weit eingefahren wird, bis die an Kolbenstange und Gegengewicht angeordneten Kupplungselemente miteinander gekuppelt sind und das Gegengewicht in seine höchste Lage angehoben ist, und daß zum Ablegen des Gegengewichtes (10) die Kolbenstange (15) durch Zufuhr von Druckflüssigkeit in den Zylinder (16) zunächst soweit ausgefahren wird, bis das Gegengewicht (10) auf der vorgesehenen Ablegefläche auf dem Kranunterwagen (2) liegt und bei weiterer Zufuhr von Druckflüssigkeit die Kolbenstange (15) bis in eine untere Endstellung ausgefahren sowie gleichzeitig der Schubkolbentrieb (16) soweit aus der Vertikalstellung geschwenkt wird, daß das an der Kolbenstange angeordnete Kupplungselement (23,43) beim an schließenden Wiedereinfahren der Kolbenstange zum Entkuppeln ungehindert an dem am Gegengewicht angeordneten Kupplungselement (24,44,45) vorbei bis in seine obere Endlage bewegt und der Schubkolbentrieb nach Erreichen dieser Endlage in die Vertikalstellung zurückgeschwenkt wird.

3. Vorrichtung, insbesondere zur Durchführung des Verfahrens nach Anspruch 1 oder 2 mit einer Kolbenzylindereinheit (14) an der dem Ausleger (6) gegenüberliegenden Seite des Windenträgers (7) mit wenigstens einem Kupplungselement (23,43) zum Ergreifen eines Auslegergegengewichtes (10), welches mit einem korrespondierenden Kupplungselement (24; 44;45) ausgerüstet ist, dadurch gekennzeichnet, daß eines der korrespondierenden Kupplungselemente (23,43 bzw. 24,44,45) an dem freien Ende der Kolbenstange (15) bzw. am Auslegergegengewicht mit einer Steuerfläche (26) derart versehen ist, daß beim Auftreffen der Steuerfläche auf das korrespondierende Kupplungselement die Kolbenstange (15) aus ihrer Schubbewegungsrichtung gegen die Kraft einer Feder (20) soweit verschwenkt wird, daß sie nach Überfahren des korrespondierenden Kupplungselementes und nach einer Umsteuerung der Ausschubbewegungen in eine Hubbewegung das entsprechende korrespondierende Kupplungselement ergreift und daß in der Bewegungsbahn des freien Endes der Kolbenstange bei deren Ausschubbewegung eine weitere Gleitfläche (33) vorgesehen ist, die bei fortgesetzter Ausschubbewegung das freie Ende der Kolbenstange (15) aus der Eingriffsbahn in das korrespondierende Kupplungselement heraus bewegt und daß eine Sperre (36) vorgesehen ist, das bei Erreichen dieser Freigabestellung die Kolbenstange (15) in der eingenommenen Position derart hält, daß sie nach Erreichen dieser Endstellung in ihre eingezogene Ausgangsstellung zurückverfahrbar ist, wobei die Sperre (36) kurz vor Beendigung der Einzugsbewegung der Zylinderstange durch einen Stößel (40) od. dgl. entriegelbar ist.

4. Einrichtung zur Durchführung des Verfahrens nach Anspruch 3, gekennzeichnet durch folgende Merkmale:

a) Der Zylinder (16) des Schubkolbentriebs (14) ist an einem Stützbock (17) od. dgl. pendelnd gelagert und in Vertikalstellung mittels an dem Stützbock (17) befestigter Rückhaltefedern (20) gegen einen Anschlag (21) gehalten,

b) mind. eines der beiden Kupplungselemente (23;24) an Kolbenstange (15) und Gegengewicht (10) ist als Haken (23) ausgebildet, der eine gegenüber der vertikalen Längsachse (25) der Kolbenstange (15) schräg verlaufende, beim Zusammentreffen mit dem korrelierenden Kupplungselement (24) ein Auslenken des Schubkolbentriebs (14) aus der Vertikalstellung bewirkende äußere Gleit bahn (26) aufweist,

c) im Bereich des Stützbockes (17) ist ortsfest ein an sich bekannter, von dem Zylinder (16) des Schubkolbentriebs beim Erreichen der Vertikalstellung betätigbarer Grenzwertschalter (29) od. dgl. angeordnet, durch den das Wiedereinfahren der Kolbenstange (15) und damit beim Anhängevorgang das Ankuppeln des Gegengewichtes (10) bewirkt wird,

d) an dem Gegengewicht ist unterhalb des an diesem angeordneten Kupplungselementes (24) eine schräg nach unten, entgegengesetzt zu der am Zylinder (16) befestigten Rückhaltefeder (20) verlaufende Gleitfläche (33) angeordnet, auf der .das freie Ende der Kolbenstange (15) und/oder das an diesem angeordnete Kupplungselement (23) beim Ausfahren der Kolbenstange zum Entkuppeln von Kolbenstange und Gegengewicht geleitet und die ein Ausschwenken des Schubkolbentriebs soweit aus der Vertikalstellung gegen die Kraft der Rückhaltefeder (20) bewirkt, daß das an dem freien Ende der Kolbenstange angeordnete Kupplungselement (23) von dem korrelierenden Kupplungselement (24) des Gegengewichtes freikommt,

e) an dem Zylinder (16) ist ein nach unten offener mit Aufgleitfläche versehener, aus waagerechter Lage nach oben schwenkbarer Arretierhaken (36) angelenkt, der nach dem durch die Gleitfläche (33) bewirkten Ausschwenken des Schubkolbentriebs (16) aus der Vertikalstellung in eine an dem Stützbock (17) befestigte Halterung (39) einklinkt,

f) im Bereich des freien Endes der Kolbenstange (15) ist an dieser ein Stößel (40) od. dgl. angeordnet, der beim Einfahren der Kolbenstange (15) vor dem Erreichen der oberen Endlage derselben den Arretierhaken (36) durch Anheben aus der Halterung (39) ausklinkt, so daß der Schubkolbentrieb von der Rückhaltefeder (20) in die Vertikalstellung zurückgeschwenkt und der Hydraulikstrom abgestellt wird.

5. Einrichtung nach Anspruch 4, dadurch gekennzeichnet, daß das Kupplungselement an der Kolbenstange als nach oben offener Haken (23) und das Kupplungselement am Gegengewicht als Rundbolzen (24) ausgebildet ist.

6. Einrichtung nach Anspruch 4, dadurch gekennzeichnet, daß das Kupplungselement an der Kolbenstange als Rundbolzen (43) und das Kupplungselement am Gegengewicht als nach unten offener Haken (44) ausgebildet ist.

7. Einrichtung nach Anspruch 4, dadurch gekennzeichnet, daß das Kupplungselement an der Kolbenstange als nach oben offener Haken (23) und das Kupplungselement am Gegengewicht als nach unten offener Haken (45) ausgebildet ist und die Spitzen der beiden Haken (23;45) einander entgegengesetzt gerichtet sind.

8. Einrichtung nach einem der Ansprüche 1 bis 7, dadurch gekennzeichnet,

daß das am Gegengewicht angeordnete Kupplungselement und die am Gegengewicht angeordnete Gleitfläche (33) in das Gegengewicht eingelassen sind.

9. Einrichtung nach einem der Ansprüche 1 bis 8,
gekennzeichnet durch
zwei im Abstand voneinander parallel angeordnete und hydraulisch miteinander verbundene Schubkolbentriebe (14) mit jeweils zugeordneten Kupplungselementen an ihnen und dem Gegengewicht (10).

1   6   10   11   9   5   4   8   14   13   16   7

12   3   2

0 240 652

Fig.1

Fig 2

0 240 652

Fig 3

15    44 26 43

10

Fig 4

27    15    23 26 45 46

10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 506 913 (VEB SCHWERMASCHINENBAU S.M. KIROW) * Seite 4, Absätze 3,4; Seite 5, Anspruch 3; Figuren 3,4 * | 1-4,7, 8 | B 66 C 23/74 |
| Y | US-A-3 257 142 (L.D. BARRY) * Spalte 5, Zeilen 24-75; Spalte 6, Zeilen 1-5 * | 1-4,7, 8 | |
| A,D | US-A-3 891 095 (W.D. SYMMANK) * Zusammenfassung; Figuren 1-5 * | 5,8,9 | |
| A | FR-A-2 516 491 (CASE CO.) | | |
| A | DE-A-2 018 818 (POTAIN POCLAIN MATERIEL) | | RECHERCHIERTE SACHGEBIETE (Int. Cl.4) |
| A | FR-A-2 272 949 (CATERPILLAR TRACTOR CO.) | | B 66 C<br>E 02 F |
| A | DE-A-2 045 454 (KRAMER-WERKE GmbH) | | |
| A | US-A-3 278 045 (K.F. POTTER) | | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 19-03-1987 | VAN DEN BERGHE E.J.J |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US-A-3 726 416 (D.R. POTTORFF) | | |
| | ----- | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 19-03-1987 | Prüfer VAN DEN BERGHE E.J.J |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82